# EUROPEAN PATENT APPLICATION

(11) **EP 2 631 006 A2**
(43) Date of publication of application: **28.08.2013**
(21) Application number: 13156399.1
(22) Date of filing: 22.02.2013
(51) Int. Cl.: B01D 53/94, F01N 3/20, H01M 8/06

(54) **Catalytic fuel vaporizer and fuel reformer assembly**

(30) Priority: 22.02.2012 US 201261601725 P
(71) Applicant: International Engine Intellectual Property Company, LLC, Lisle, Illinois 60532 (US)
(72) Inventor: Nicole, Jacques Florian, Palo Alto, CA 94301 (US); Ngan, Even, San Jose, CA 95132 (US)
(74) Representative: Kuhnen & Wacker

(57) **Abstract**

In one embodiment, an assembly for use with a lean NOx catalyst (LNC) is described. An outer tube is coupled to the LNC. An inner tube is disposed completely inside the outer tube. The exhaust flow is split between the inner tube and the outer tube. The inner tube houses a catalytic fuel vaporizer and a catalytic fuel reformer that convert at least a portion of the injected hydrocarbons to hydrogen and carbon monoxide, and vaporized hydrocarbons for NOx reduction.

## Description

### BACKGROUND

Lean NOx Catalyst (LNC) technology generally operates using hydrocarbons (HC) to reduce oxides of nitrogen (NOx). Studies related to LNC technology have also shown the benefits of hydrogen (H₂) in helping the LNC to reduce NOx at lower exhaust gas temperatures.

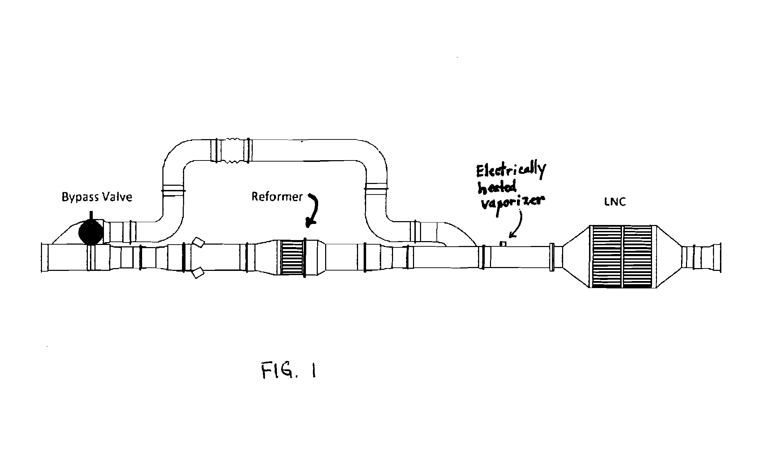

Referring to FIG. 1, a bypass valve in combination with a fuel reformer is used for generating the hydrogen for the LNC. An external fuel source such as a fuel injector or an electrically heated vaporizer device can be used to provide HC as a reductant for the LNC. Alternatively, an electrically heated vaporizer device in combination with a fuel reformer that uses a bypass valve to direct partial flow into a fuel reformer can be used to provide H₂ and HC as a reductant for the LNC, which can improve NOx conversion at lower temperatures. The fuel reformer or an electrically heated fuel vaporizer device is used to introduce reductant independently or jointly to the LNC for NOx reduction.

The bypass valve is used to regulate the exhaust flow into the fuel reformer to control the temperature of the fuel reformer and the fuel-to-oxygen ratio while fueling rich continuously to generate hydrogen. Closed loop control over the bypass valve is used while monitoring the exhaust flow rate into the reformer. The flow rate entering the fuel reformer is determined by measuring the pressure drop across a flow-through orifice. The measurement of the flow rate through the flow-through orifice entering the fuel reformer is needed to calculate the fuel injection needed to generate sufficient amounts of hydrogen for the LNC to reduce NOx. However, the flow-through orifice and the bypass valve configuration suffers from inaccuracies, a slow response time (e.g., the slow response time of the bypass valve), the need for additional pressure monitoring across the orifice, and/or the packaging challenges that are inherent to the configuration illustrated in FIG. 1.

### SUMMARY

In one embodiment, an assembly includes, for example, an outer tube and an inner tube. The inner tube is disposed completely inside the outer tube. The exhaust flow is split between the inner tube and the outer tube. The inner tube houses a catalytic fuel reformer.

In another embodiment, a method provides an intra-tubular catalytic fuel vaporizer and fuel reformer for use with an LNC. The method can include, for example, one or more of the following: providing an inner tube completely within an outer tube, the outer tube being coupled to the LNC; providing a catalytic fuel vaporizer and a fuel reformer in the inner tube; and vaporizing hydrocarbons and producing hydrogen by the catalytic fuel vaporizer and the fuel reformer disposed in the inner tube.

In another embodiment, an assembly is used within an exhaust gas recirculation (EGR) system of an engine. The assembly includes, for example, an outer tube and an inner tube. The outer tube is coupled to the engine (e.g., an EGR leg or loop of the engine). The inner tube is disposed completely inside the outer tube. The exhaust flow is split between the inner tube and the outer tube. The inner tube houses a catalytic fuel vaporizer and a fuel reformer

In another embodiment, an assembly is used with a fuel cell. The assembly includes, for example, an outer tube and an inner tube. The inner tube is disposed completely inside the outer tube. The exhaust flow is split between the inner tube and the outer tube. The inner tube houses a catalytic fuel vaporizer, a fuel reformer and a hydrogen separation membrane.

### BRIEF DESCRIPTION OF THE DRAWINGS

FIG. 1 is a conventional configuration for a fuel reformer and a bypass valve used with a lean NOx catalyst (LNC).

FIG. 2 is an embodiment of an exhaust assembly with an intra-tubular catalytic fuel vaporizer and fuel reformer.

FIG. 3A is a cross section of a first embodiment of the intra-tubular catalytic fuel vaporizer and fuel reformer.

FIG. 3B is a cross section of a second embodiment of the intra-tubular catalytic fuel vaporizer and fuel reformer.

FIG. 3C is a cross section of a third embodiment of the intra-tubular catalytic fuel vaporizer and fuel reformer.

FIG. 4 is an embodiment of the intra-tubular catalytic fuel vaporizer and fuel reformer and illustrates some of the configuration degrees of freedom.

FIG. 5 is an embodiment of the fueling area for an intra-tubular catalytic fuel vaporizer and fuel reformer device.

FIG.6 is an embodiment of an intra-tubular fuel reformer without a catalytic fuel vaporizer.

FIG. 7A is an embodiment of an intra-tubular reformer system in an exhaust pipe.

FIG. 7B is the intra-tubular catalytic fuel vaporizer and reformer system of FIG. 7A.

FIG. 8A is a photograph of an embodiment of an intra-tubular catalytic fuel vaporizer and reformer.

FIG. 8B is a layout diagram of the intra-tubular catalytic fuel vaporizer and reformer of FIG. 8A.

FIG. 9 illustrates an embodiment of an intra-tubular catalytic fuel vaporizer and reformer layout in an LNC configuration.

FIG. 10 is a graph of the temperature of the inner tube system at various catalyst locations during various fueling schedules.

FIG. 11 is a plot of inner tube outlet gas composition: hydrogen, carbon monoxide and hydrocarbons at various fueling schedules for the same injected diesel fuel flow rate.

### DETAILED DESCRIPTION

Lean NOx Catalyst (LNC) technology currently operates using hydrocarbons (HC) to reduce oxides of nitrogen (NOx). Hydrocarbons are introduced through in-pipe injection or in-cylinder. Hydrogen has also been used as a reductant to reduce NOx on a LNC. Hydrogen has shown a benefit over HC especially at low LNC temperatures. A reformer can be introduced to generate hydrogen. An intra-tubular catalytic fuel vaporizer and fuel reformer configuration can provide HC and hydrogen for the LNC to reduce NOx.

Some embodiments do not use an electrically heated device to vaporize the fuel for LNC. Some embodiments do not use a bypass valve in combination with a fuel reformer as illustrated in FIG. 1.

Some embodiments provide an intra-tubular catalytic fuel vaporizer and a catalytic fuel reformer configuration that allows a portion of the exhaust flow to enter the reformer catalyst and another portion of the exhaust flow (e.g., the remaining portion of the exhaust flow from the engine) to bypass the reformer without using a bypass valve.

Some embodiments use the intra-tubular catalytic fuel vaporizer to vaporize diesel fuel injected into the exhaust pipe, which reduces system packaging size.

Some embodiments use the intra-tubular fuel reformer catalyst to generate hydrogen for the LNC.

Some embodiments use the intra-tubular catalytic fuel vaporizer and fuel reformer as an after-treatment device to help reduce NOx when combined with other after-treatment technologies such as, for example, the LNC.

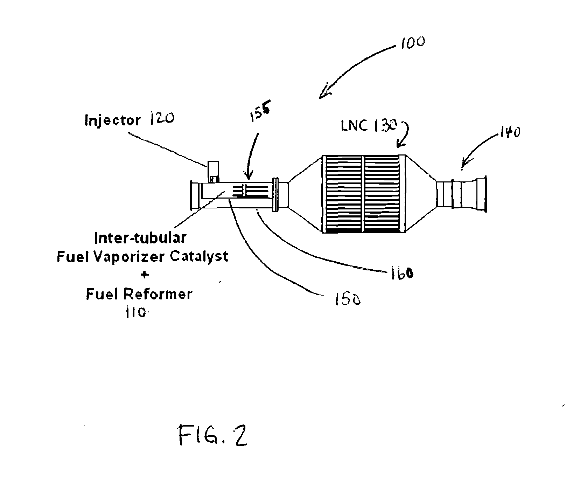

Referring to FIG. 2, an exhaust assembly 100 includes an intra-tubular catalytic fuel vaporizer and fuel reformer 110, an injector 120, and the LNC 130. The embodiment illustrated in FIG. 2 does not use the bypass valve, additional external piping and electrically heated fuel vaporizer that was used in FIG. 1.

The intra-tubular catalytic fuel vaporizer and fuel reformer 110 are located before the LNC 130 as part of an exhaust pipe 140 of a vehicle, for example. The exhaust pipe before the LNC 130 includes an inner tube 150 (e.g., inner pipe) and an outer tube 160 (e.g., outer pipe). The inner tube 150 is inside (e.g., completely inside) the outer tube 160. The inner tube 150 houses the intra-tubular catalytic fuel vaporizer and fuel reformer 110. In addition, the injector 120 acts as a fuel doser and injects fuel only to the inner tube 150 where the intra-tubular catalytic fuel vaporizer and fuel reformer 110 resides. The fuel doser is located upstream of the catalytic fuel vaporizer of the intra-tubular catalytic fuel vaporizer and fuel reformer 110. Also illustrated in FIG. 2 is a substrate 155 located in the inner tube 150. A coating that includes, for example, a fuel vaporizer catalyst and/or a fuel reformer catalyst is applied to the substrate 155.

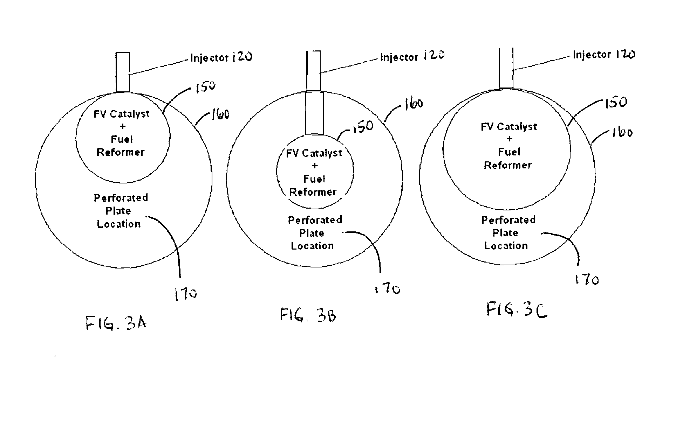

Referring to FIGS. 3A-C, several possible locations and sizes of the inner tube 150 within the outer tube 160 are illustrated. The injector 120 can be configured to be perpendicular to the exterior of the inner tube 150 and/or the outer tube 160. In another embodiment, the injector 120 is configured to be at an angle other than approximately 90 degrees relative to the inner tube 150 and/or the outer tube 160. For example, the injector 120 can be configured to be at an approximately 45 degree angle relative to the inner tube 150 and/or the outer tube 160. An approximately four to approximately five inch pipe, for example, can be used as a housing for the intra-tubular catalytic fuel vaporizer and fuel reformer 110. In one embodiment, the outer tube 160 or the inner tube 150 can have the diameter of a typical truck exhaust pipe diameter. The length of the inner tube that houses the intra-tubular catalytic fuel vaporizer and fuel reformer 110 can have a length that is determined by the sizing of the fuel vaporizer and the reformer catalysts needed to yield sufficient amounts of H₂ and vaporized HC for a particular NOx reduction technology. The diameter of the inner tube 150 (e.g., the intra-tubular diameter) can vary depending on its sizing to meet the H₂ and HC requirements of a particular application (e.g., a fuel cell application, an LNC application, a lean NOx trap (LNT) application, an exhaust gas recirculation (EGR) application, and other applications).

A perforated plate location 170, which is also illustrated in FIGS. 3A-C, is located outside of the inner tube 150 and inside the outer tube 160. A perforated plate disposed at the perforated plate location 170 provides backpressure to have a fixed flow split ratio between the inner tube 150, where the fuel vaporizer and the fuel reformer catalysts reside, and the outer tube 160, where there is void volume, for example.

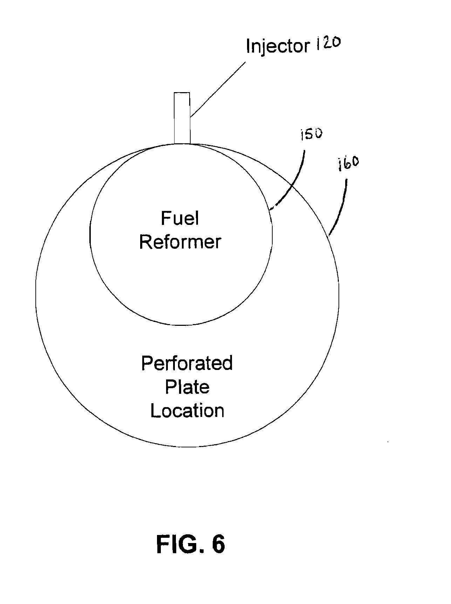

Referring to FIG. 6, an embodiment is illustrated in which the inner tube 150 includes a fuel reformer without a catalytic fuel vaporizer. The intra-tubular catalytic fuel reformer can function with or without a catalytic fuel vaporizer. For example, the intra-tubular fuel reformer can generate hydrogen with or without a fuel vaporizer.

In some embodiments, the catalytic fuel vaporizer is used as a method to vaporize the fuel to allow for a smaller packaging size.

In some embodiments, an electrically heated fuel igniter is located upstream of the catalytic fuel reformer. The electrically heated fuel igniter can also be in or part of the inner tube 150, or can be upstream of the inner tube 150.

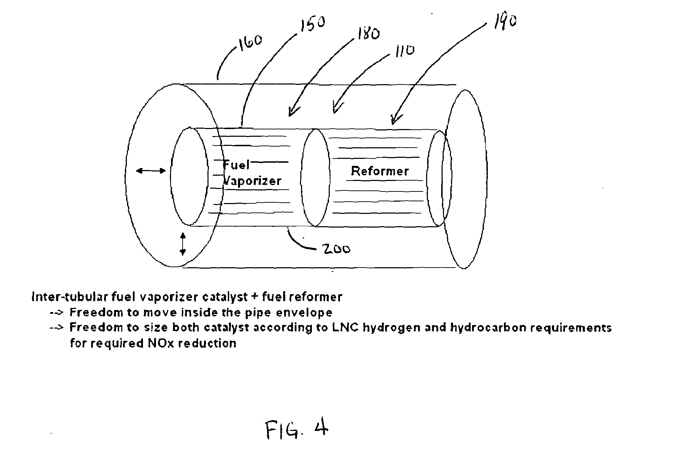

Referring to FIG. 4, some of the degrees of configuration freedom are illustrated with respect to the intra-tubular catalytic fuel vaporizer and fuel reformer device 200. The intra-tubular catalytic fuel vaporizer and fuel reformer device 200 includes, for example, a catalytic fuel vaporizer 180 and a catalytic fuel reformer 190 (e.g., a fuel reformer catalyst). The intra-tubular catalytic fuel vaporizer and fuel reformer device 200 is housed in an inner tube 150 which is inside an outer tube 160.

In configuring the intra-tubular catalytic fuel vaporizer and fuel reformer device 200, there is a configuration freedom to locate the intra-tubular catalytic fuel vaporizer and fuel reformer device 200 anywhere inside the pipe envelope of the outer tube 160 (e.g., the outer pipe that leads to the LNC 130). In addition, in configuring the intra-tubular catalytic fuel vaporizer and fuel reformer device 200, there is a configuration freedom to size the catalytic fuel vaporizer 180 and the catalytic fuel reformer 190. For example, the diameter and length of the catalytic fuel vaporizer 180 and the catalytic fuel reformer 190 can be configured to provide specified amounts of HC and H₂, for example.

The steps to design, implement and/or make an embodiment of the intra-tubular catalytic fuel vaporizer and fuel reformer device 200 for the LNC application include, for example, one or more of the following: (1) identify the amount of NOx reduction specified or required by the LNC 130 for a particular engine application; (2) identify and design (e.g., configure) the catalytic fuel vaporizer 180 and the catalytic fuel reformer 190 to produce enough H₂ and have enough vaporized HC to convert the specified amount of NOx (e.g., the identified amount of NOx reduction); (3) design (e.g., configure) an intra-tubular device to house the catalytic fuel vaporizer 180 and the catalytic fuel reformer 190; and (4) operate using a lean/rich modulation to produce H₂ and vaporized HC.

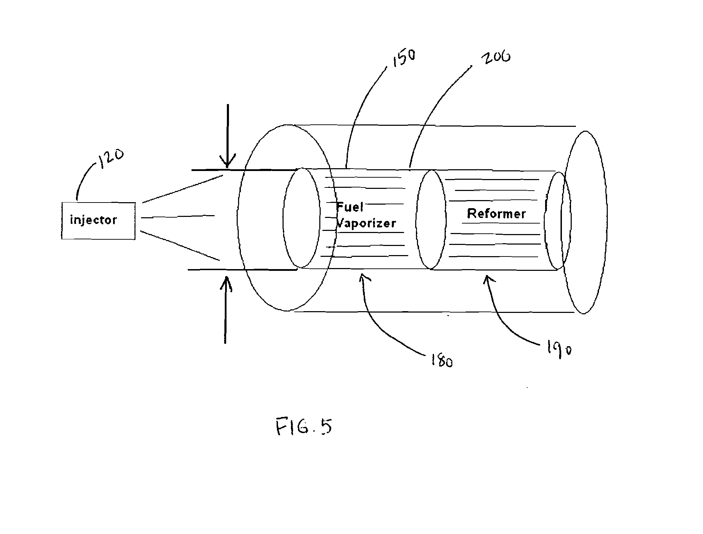

Referring to FIG. 5, a fueling area is illustrated for the intra-tubular catalytic fuel vaporizer and fuel reformer device 200. The injector 120 injects fuel (e.g., diesel fuel) only into the inner tube 150 where the catalytic fuel vaporizer 180 and/or the fuel reformer catalysts 190 reside. The injector 120 can be positioned in many different configurations to deliver the fuel to the intra-tubular catalytic fuel vaporizer and fuel reformer device 200. Although illustrated as axially aligned with the inner tube 150, the injector 120 can be perpendicular to the axis of the inner tube 150 or can be disposed at an angle to the axis of the inner tube 150.

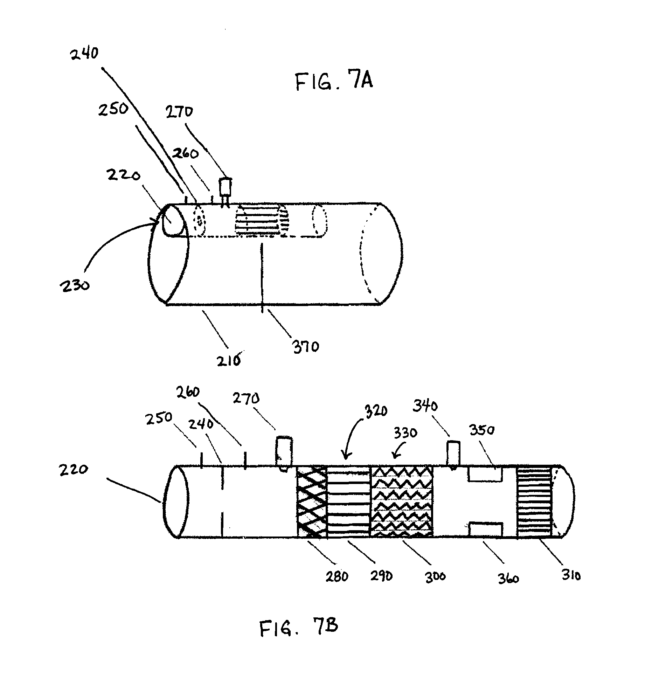

Referring to FIGS. 7A and 7B, an embodiment of an intra-tubular catalytic fuel vaporizer and fuel reformer system is illustrated. The intra-tubular catalytic fuel vaporizer and fuel reformer system includes, for example, an exhaust pipe 210 and an inner tube 220 disposed inside the exhaust pipe 210. An inner tube system 230 includes, for example, the inner tube 220, an orifice plate 240 and two pressure taps 250, 260. The orifice plate 240 and the two pressure taps 250, 260 can be configured to measure the exhaust flow rate going through the inner tube 220. A fuel injector 270 is mounted on the exhaust pipe 210 with its spray nozzle in the inner tube 220. The inner tube 220 contains reactor elements: a static fuel mixer and catalytic fuel vaporizer 280, a combustion catalytic reactor 290, a reforming catalytic reactor 300, and, in some applications, a water-gas shift catalytic reactor 310. To make the diesel fuel reformer more soot resistant in a diesel engine exhaust stream, first and second catalyst supports 320, 330 are serially arranged. The first support 320 is closer to the inlet and has a monolith structure that is uniform in the direction of flow. The second support 330 has a modified monolith structure that is non-uniform in the direction of flow. In some embodiments, the first support 320 has straight channels; and the second support 330 has internal leading edges spaced periodically through its length to break up the flow. In addition, the structures of first and second supports 320, 330 are conveniently modified as specified for safe operation and to deliver the intended amounts of hydrogen and hydrocarbon. The first support 320 has a catalyst coating that includes at least an oxidation catalyst. The second support 330 has a catalyst coating that includes at least a steam reforming catalyst. Additional elements contained in the inner tube that are used for some applications may include, for example, a water injector 340 that is downstream of the catalytic fuel reformer to add steam to the reformate to displace the water-gas shift equilibrium; and heat transfer winglets 350 and 360 to dissipate heat to the exhaust in the main exhaust pipe. A valve 370 (e.g., a butterfly valve) allows control of the flow split ratio between the inner tube and the main exhaust pipe. In one embodiment, the valve 370 is present in the outer tube and the perforated plate is not present in the outer tube.

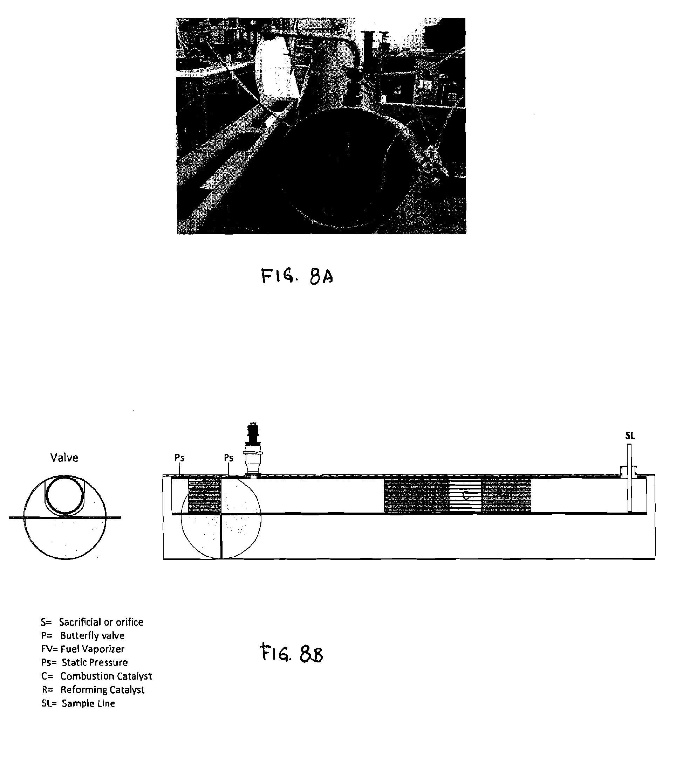

FIGS. 8A and 8B illustrate a photograph and a layout diagram of an embodiment of the intra-tubular catalytic fuel vaporizer and reformer.

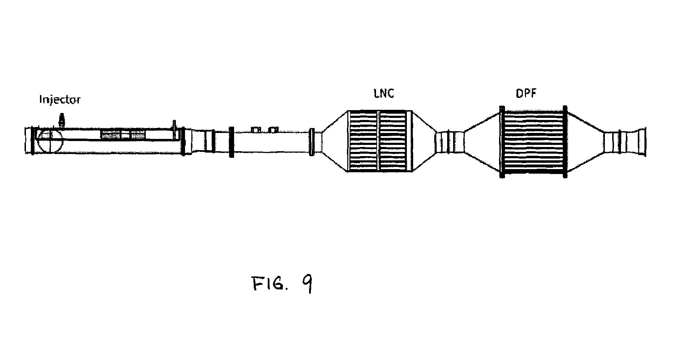

FIG. 9 illustrates an embodiment of an intra-tubular catalytic fuel vaporizer and reformer layout in an LNC configuration. In FIG. 9, the intra-tubular reformer is upstream of the LNC which, in turn, is upstream of the diesel particulate filter (DPF).

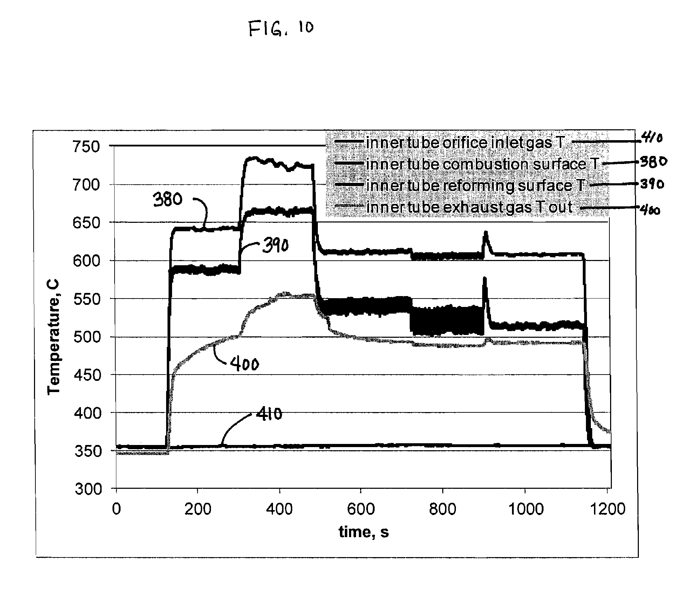

FIG. 10 illustrates graphs of the temperature of the inner tube system at various locations during various fueling schedules. The graphs plot inner tube orifice inlet gas temperature, inner tube combustion surface temperature, inner tube reforming surface temperature and inner tube exhaust gas temperature as a function of time.

In FIG. 10, measured temperatures are shown at locations along the assembly 100 from the inlet end 220 to the outlet end for different fueling schedules. The curve 380 is at a location that is within the combusting catalyst element 320. The curve 390 is at a location that is within the reforming catalyst element 330. The curve 400 is at a location that is within the inner tube 220, downstream of the reforming catalyst element 330. The orifice inlet gas temperature curve 410 is at a location that is within the inner tube 220, upstream of the catalytic vaporizer element 280. As shown by FIG. 10, the assembly 100 is able to maintain stable temperatures at locations along the assembly 100 for different fueling schedules.

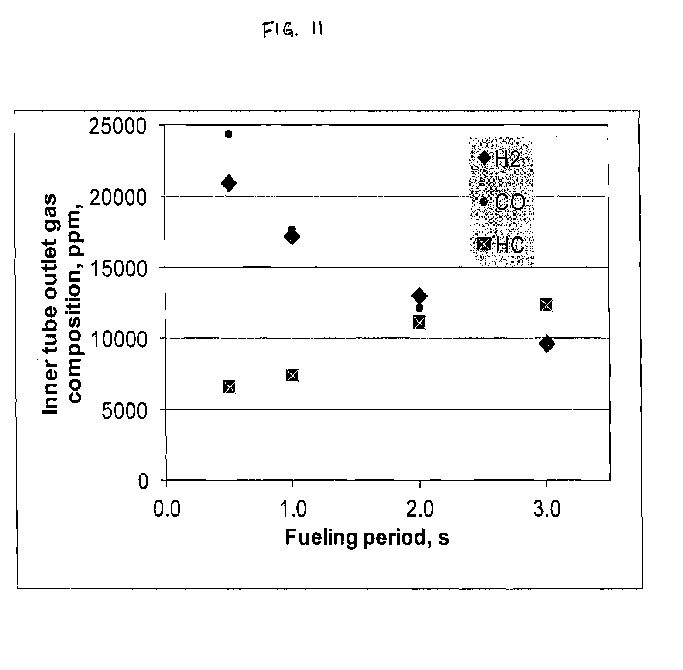

FIG. 11 illustrates data plots of inner tube outlet gas composition at various fueling schedules for the same injected diesel fuel flow rate. The graph plots inner tube outlet gas composition: hydrogen, carbon monoxide and hydrocarbons (C1 basis) as a function of fueling period.

In FIG. 11, measured concentration of hydrogen, carbon monoxide and hydrocarbons are plotted for different fueling schedules, at a constant fueling flow rate, at a location that is within the inner tube 220, downstream of the reforming catalyst element 330. As shown by FIG. 11, the assembly 100 is able to produce reformate (e.g., hydrogen and carbon monoxide) and to vary the ratio of hydrocarbons to reformate by varying the fueling schedule.

Some embodiments provide that control systems (e.g., electronic control systems) cause the fuel injector 120 to modulate between lean and rich to provide a sufficient amount of HC and H₂ for the LNC 130. Such a strategy is based, in some embodiments, on one or more known facts including, for example: an exhaust flow rate, an oxygen concentration, and the LNC selectivity of HC and H₂. The exhaust flow rate used for the catalytic fuel vaporizer 180 and the catalytic fuel reformer 190 can be directly taken from an engine air intake and engine fueling since the flow split ratio should be fixed between the flow entering to the catalyst or through the perforated plate.

Some embodiments provide for the removal of additional parts from conventional assemblies such as, for example, an electrically heated vaporizer and/or a bypass valve for the fuel reformer 190 in the event that an intra-tubular catalytic fuel vaporizer and reformer system is used.

Some embodiments provide for an intra-tubular catalytic fuel vaporizer and fuel reformer assembly for continuous operation of a lean NOx catalyst.

Some embodiments provide a fuel reformer 190 that has a low light-off temperature and provides hydrogen in addition to the hydrocarbons for the LNC 130 to reduce NOx. Hydrogen can help the LNC 130 convert more NOx at lower exhaust temperatures.

Some embodiments provide a low light-off fuel reformer 190 that provides additional heat that can be used to raise the LNC brick temperature which can improve NOx conversion.

Some embodiments provide a catalytic fuel vaporizer 180 that can be used to vaporize fuel used by the LNC 130 to reduce NOx and can enable a small mixing length for the fuel reformer catalyst 190.

Some embodiments provide that the catalytic fuel vaporizer and fuel reformer 110 is configured to convert only a small amount of the fuel to hydrogen and combust just enough fuel to generate heat (e.g., sufficient or necessary heat) to vaporize the fuel for use by the LNC 130.

Some embodiments do not require the use of urea and/or diesel exhaust fluid (DEF).

Some embodiments reduce coking issues on the LNC catalyst. Rather than using an electrically heated vaporizer for hydrocarbon vaporization at lower temperatures, for example, at below approximately 300°C or at another specified temperature where coking can be a problem. The catalytic fuel vaporizer and fuel reformer 110 can allow for a larger operation window of the LNC and reduce coking issues.

Some embodiments satisfy government emission regulations in the United States and in foreign authorities (e.g., Europe, Japan, etc.)

Some embodiments can be used with diesel engines, hybrid electric engines, plug-in hybrid electric engines, or other types of engines.

Some embodiments contemplate using the intra-tubular catalytic fuel vaporizer and fuel reformer arrangement with applications other than with the LNC 130.

For example, some embodiments use the intra-tubular catalytic fuel vaporizer and fuel reformer arrangement with a lean NOx trap (LNT). The intra-tubular catalytic fuel vaporizer and fuel reformer is coupled to and upstream of the LNT. The LNC in FIG. 2 can be replaced with the LNT, for example. The LNT operates in a lean environment to trap NOx. The LNT traps NOx from partial lean burn gasoline engines and diesel engines, for example. The intra-tubular catalytic fuel vaporizer and fuel reformer can be used to regenerate the LNT by providing carbon monoxide and hydrogen to the LNT. The regenerated LNT can then store NOx. HCs that slip past the catalytic fuel vaporizer and fuel reformer can also be used as a reductant to regenerate the LNT. The intra-tubular catalytic fuel vaporizer and fuel reformer can be operated in a continuous fashion to regenerate the LNT. The LNT can be used in a cyclic mode (e.g., NOx storing/LNT regeneration by reductant) or in a continuous mode. In the continuous mode of operation, continuous short cycle injections of HCs are supplied at a predetermined concentration in lean conditions.

Some of the steps to design, implement and/or make an embodiment of the intra-tubular catalytic fuel vaporizer and fuel reformer for use with the LNT include, for example: identify the amount of NOx reduction required by the LNT for a particular engine application, while, for example, minimizing LNT volume to reduce precious metal loadings; identify and design (e.g., configure) the fuel vaporizer catalyst and fuel reformer catalyst that can produce the amount of HC and reformate (e.g., H₂ and CO) to convert the NOx on the LNT; design (e.g., configure) the intra-tubular device to fit the small fuel vaporizer and fuel reformer catalysts; and operate continuously using a lean/rich modulation to produce HC and reformate (e.g., H₂ and CO). Control systems will cause the fuel injector to modulate between lean and rich in continuous mode to provide sufficient amounts of hydrocarbon and hydrogen for the LNT and to control the catalytic components temperature. Implementations can use exhaust flow rate and oxygen concentration. The exhaust flow rate can be taken from the engine intake air and engine fueling because the flow split ratio between the flow entering to the fuel vaporizer and reformer catalysts and the flow entering the outer tube is known.

Some embodiments used with LNTs provide a reformer that has a low light-off temperature. Since the size of the reformer is small compared to an in-line reformer, the loading of more precious metals on the catalyst to lower the light-off temperature is acceptable from a cost standpoint. Some embodiments provide that the reformer can provide heat to the LNT brick and can increase the activity of the LNT brick. Some embodiments provide that the catalytic fuel vaporizer allows a compact gas mixing zone upstream of the fuel reformer and eases packaging of the after-treatment system. Moreover, the system does not require the use of urea or DEF. Some embodiments provide that the LNT volume can be significantly reduced if the catalytic fuel vaporizer and fuel reformer is operating continuously, which can reduce cost from precious metal loadings on the LNT. In addition, the LNT NOx reduction can be controlled effectively while managing fuel penalty.

Some embodiments use the intra-tubular catalytic fuel vaporizer and fuel reformer arrangement with exhaust gas recirculation (EGR). The introduction of hydrogen inside an internal combustion chamber reduces products of incomplete combustion (e.g., unburned HC and CO in the exhaust), particulate matter and NOx. The intra-tubular catalytic fuel vaporizer and fuel reformer can be placed in an EGR leg of a diesel internal combustion engine assembly, for example, to provide hydrogen into the combustion chamber. The intra-tubular catalytic fuel vaporizer and fuel reformer are small enough to fit inside the EGR loop of a diesel engine, for example. An optional fuel doser can be located upstream of the catalytic fuel vaporizer and can inject fuel only to the inner tube where the catalytic fuel vaporizer and fuel reformer sit. The fuel can also come from post cycle injection from the engine to produce hydrogen.

Some of the steps to design, implement and/or make an embodiment of the intra-tubular catalytic fuel vaporizer and fuel reformer for use with EGR include, for example: identify the amount of hydrogen required to be introduced into the combustion chamber to reach target tailpipe emission levels; identify and configure the fuel vaporizer catalyst and fuel reformer catalyst to produce the required amount of hydrogen; design (e.g., configure) an intra-tubular device to fit the small fuel vaporizer and fuel reformer catalysts; and operate discontinuously with EGR fuel injection to generate the required hydrogen levels. Implementations can use exhaust flow rate in the EGR leg and the oxygen concentration.

Some embodiments used with the EGR system can reduce products of incomplete combustion. Some embodiments provide that the small and compact packaging can fit inside the EGR pipe. Moreover, the system does not require the use of urea or DEF.

Some embodiments use the intra-tubular catalytic fuel vaporizer and fuel reformer arrangement for enhanced passive DPF regeneration. One of the purposes of passive DPF technology is to remove particulate matter from the engine exhaust. Passive DPF regeneration technology uses a diesel oxidation catalyst (DOC) to promote oxidation of NO to NO₂, which can be used effectively to facilitate the regeneration of DPF. Since the oxidation of NO to NO₂ on the DOC is favorable at higher catalyst temperatures, the intra-tubular catalytic fuel vaporizer and fuel reformer can be used to elevate the exhaust gas temperature to an optimal temperature for the DOC to promote oxidation of NO to NO₂. The intra-tubular catalytic fuel vaporizer and fuel reformer arrangement can be coupled to and upstream of the DOC which, in turn, is coupled to and upstream of the DPF. The intra-tubular catalytic fuel vaporizer and fuel reformer can be used, for example, as a diesel fuel combustor to generate heat for the DOC and to increase the operating efficiency of the DOC to promote NO-to-NO₂ conversion. A fuel doser can be located upstream of the catalytic fuel vaporizer and can inject fuel only to the inner tube where the catalytic fuel vaporizer and fuel reformer sit. The fuel injected can raise exhaust gas temperatures for the DOC to operate efficiently.

Some of the steps to design, implement and/or make an embodiment of the intra-tubular catalytic fuel vaporizer and fuel reformer for use with the enhanced passive DPF regeneration include, for example: identify the amount of heat required to raise exhaust gas temperatures to favorable DOC temperatures according to the expected flows given by the displacement of the engine, wherein exhaust gas temperatures will only need to be raised for certain low flow and temperature conditions; identify and configure a catalytic fuel vaporizer and fuel reformer that will produce the amount of heat required and light off at low temperatures; design an intra-tubular device to fit the small fuel vaporizer and fuel reformer catalysts; and operate by in-pipe fuel injection to raise the exhaust gas temperature.

Some embodiments used with the enhanced passive DPF regeneration can reduce products of incomplete combustion from the engine. Some embodiments provide that the small and compact packaging can be fitted inside the DPF pipe.

Some embodiments use the intra-tubular catalytic fuel vaporizer and fuel reformer arrangement with fuel cells. For example, hydrogen is produced by the intra-tubular catalytic fuel vaporizer and fuel reformer. The hydrogen can then be separated from the exhaust main stream by a coaxial hydrogen separation membrane and fed to a fuel cell for power generation. The coaxial hydrogen separation membrane, which is commercially available, can be located, for example, at the exit of the inner tube of the intra-tubular catalytic fuel vaporizer and fuel reformer arrangement. The combined operation of an engine and a fuel cell increases the overall efficiency of a particular power source, by converting some of the energy contained in the engine exhaust to useful electric power.

## Claims

1. An assembly, comprising:
an outer tube; and
an inner tube disposed completely inside the outer tube,
wherein exhaust flow is split between the inner tube and the outer tube, and
wherein the inner tube houses a catalytic fuel reformer.

2. The assembly of claim 1, wherein the inner tube houses a catalytic fuel vaporizer and the catalytic fuel reformer, and wherein the outer tube is coupled to one or more of the following: a lean NOx catalyst (LNC) and a lean NOx trap (LNT).

3. The assembly of claim 1, wherein the inner tube houses a catalytic fuel vaporizer and the catalytic fuel reformer.

4. The assembly of claim 1, wherein the inner tube houses a catalytic fuel vaporizer, the catalytic fuel reformer, a water injector, a heat exchanger and a water-gas shift catalyst.

5. The assembly of claim 3, wherein the catalytic fuel reformer includes a first catalyst support and a second catalyst support, wherein the first catalyst support has a monolith structure that is uniform in a direction of flow, and wherein the second catalyst support has a modified monolith structure that is non-uniform in the direction of flow.

6. The assembly of claim 1, wherein a fuel is injected into the inner tube, and wherein the fuel includes one or more of the following: a hydrocarbon and an oxygenate.

7. The assembly of claim 6, wherein the hydrocarbon includes one or more of the following: gasoline, methane and diesel.

8. The assembly of claim 6, wherein the oxygenate includes one or more of the following: ethanol and methanol.

9. The assembly of claim 1, comprising a fuel igniter that is located upstream of the catalytic fuel reformer, wherein the assembly does not include an electrically heated fuel vaporizer.

10. The assembly of claim 1, comprising:
an injector coupled to the inner tube, wherein the injector injects fuel into the inner tube, and wherein the injector is modulated between lean and rich to provide sufficient amounts of hydrocarbons and hydrogen for the LNC.

11. The assembly of claim 1, wherein a catalytic fuel vaporizer and the catalytic fuel reformer vaporize hydrocarbons and produce hydrogen and carbon monoxide that are used to convert NOx, and wherein the assembly is an after-treatment system.

12. The assembly of claim 1, comprising a perforated plate or a butterfly valve that are located outside the inner tube and inside the outer tube.

13. A method for providing an intra-tubular catalytic fuel vaporizer and fuel reformer for use with a lean NOx catalyst (LNC), comprising:
providing an inner tube completely within an outer tube, the outer tube being coupled to the LNC;
providing a catalytic fuel vaporizer and a fuel reformer in the inner tube; and
vaporizing hydrocarbons and producing hydrogen by the catalytic fuel vaporizer and the fuel reformer disposed in the inner tube.

14. An assembly for use within an exhaust gas recirculation (EGR) system of an engine, comprising:
an outer tube coupled to the engine; and
an inner tube disposed completely inside the outer tube,
wherein exhaust flow is split between the inner tube and the outer tube, and
wherein the inner tube houses a catalytic fuel vaporizer and a fuel reformer.

15. An assembly for use with a fuel cell, comprising:
an outer tube; and
an inner tube disposed completely inside the outer tube,
wherein exhaust flow is split between the inner tube and the outer tube, and
wherein the inner tube houses a catalytic fuel vaporizer, a fuel reformer and a hydrogen separation membrane.
